# DEMANDE DE BREVET EUROPEEN

(11) **EP 0 911 146 A2**
(43) Date de publication de la demande: **28.04.1999**
(21) Numéro de dépôt: 98402570.0
(22) Date de dépôt: 16.10.1998
(51) Int. Cl.: B32B 7/06, B32B 27/06, B65D 65/40, B65D 75/58

(54) **Film thermoplastique multicouche pour scellage sur lui-même ou sur un substrat, et procédé de fabrication du film**

(30) Priorité: 20.10.1997 FR 9713091
(71) Demandeur: Soplaril SA, 92800 Puteaux (FR)
(72) Inventeur: Barranx, Patrick, 40180 Sort en Chalosse (FR)
(74) Mandataire: Michardière, Bernard

(57) **Abrégé**

Film thermoplastique multicouche pelable, pouvant être scellé sur lui-même ou sur un substrat, comprenant une couche (A) de matière plastique scellable par soudure sur elle-même ou sur le substrat . La couche scellable (A), du côté opposé à sa face destinée à être soudée, est liée à une couche (B) de matière plastique sécable dans la masse, la force de liaison entre les deux couches (A, B) étant supérieure à la force de rupture de la couche sécable (B), tandis que la couche scellable (A) présente une relative fragilité au ras de la soudure (2) de sorte que , lors de la séparation du film (1), la couche scellable (A) est propre à se casser au ras (2a, 2b) de la soudure, et qu'ensuite la couche sécable (B) se fracture dans la masse . La densité de la couche sécable (B) est au moins égale à 0,9.

## Description

L'invention est relative à un film thermoplastique multicouche pouvant être scellé sur lui-même ou sur un substrat, et qui est "pelable", c'est-à-dire qui peut être séparé à la manière d'une peau.

Un tel film thermoplastique peut servir , par exemple, à fermer une barquette contenant une préparation alimentaire. La barquette joue donc ici le rôle de substrat. Le film est scellé par une soudure sur un rebord de la barquette, et la séparation du film est effectuée, le plus souvent, sur la même interface que la soudure.

Il en résulte plusieurs inconvénients.

Il faut tout d'abord concilier deux exigences contradictoires : pour assurer une bonne étanchéité, la soudure du film doit être aussi forte que possible ; par contre, pour assurer une bonne "pelabilité", c'est à dire une bonne aptitude à l'enlèvement du film comme une peau, il convient que la soudure ne soit pas trop forte.

En outre, l'enlèvement du film laisse, la plupart du temps, des fibres ou des morceaux de film sur les zones de soudure, donnant un aspect qui manque de netteté.

On a déjà proposé des solutions pour réduire ces inconvénients. Par exemple, on connaît d'après le modèle d'utilité allemand DE GM 79 05 946 un film thermoplastique multicouche pelable, pour scellage sur lui-même ou sur un substrat, en particulier un récipient. Le film thermoplastique comprend une couche de matière plastique scellable qui , du côté opposé à sa face destinée à être soudée, est liée à une couche de matière plastique sécable dans la masse, la force de liaison entre les deux couches étant supérieure à la force de rupture de la couche sécable, tandis que la couche scellable présente une relative fragilité mécanique au ras de la soudure ; lors de la séparation du film, la couche scellable est propre à se casser au ras de la soudure et, ensuite, la couche sécable se fracture dans la masse ce qui permet de peler correctement le film.

Selon DE GM 79 05 946, la couche sécable présente une structure relativement compliquée avec des cavités entourant des particules minérales dispersées. Ces cavités peuvent être modifiées par le scellage à chaud, ce qui entraîne que le résultat final peut dépendre fortement des conditions de scellage. Il en résulte des conditions de mise en oeuvre particulières pour préserver les cavités ainsi que le caractère sécable de la couche.

L'invention a pour but, surtout, de fournir un film thermoplastique multicouche dans lequel la structure de la couche sécable est simplifée, tout en conservant une bonne "pelabilité".

Il est souhaitable en outre que le film soit transparent et qu'il soit apte à subir au moins un traitement de pasteurisation et, le cas échéant, à subir un traitement de stérilisation.

D'une manière surprenante, on a trouvé qu'en choisissant une couche sécable dont la densité, par rapport à l'eau, est au moins égale à 0,9 , on obtient un film qui présente une bonne "pelabilité" et dont la mise en oeuvre n'impose pas de précautions particulières.

Selon l'invention, un film thermoplastique multicouche pelable, pour scellage sur lui-même ou sur un substrat, en particulier un récipient, du genre comprenant une couche de matière plastique scellable par soudure sur elle-même ou sur le substrat , cette couche scellable, du côté opposé à sa face destinée à être soudée, étant liée à une couche de matière plastique sécable dans la masse, la force de liaison entre les deux couches étant supérieure à la force de rupture de la couche sécable, tandis que la couche scellable présente une relative fragilité mécanique au ras de la soudure, de sorte que, lors de la séparation du film, la couche scellable est propre à se casser au ras de la soudure et qu'ensuite la couche sécable se fracture dans la masse, est caractérisé par le fait que la densité, par rapport à l'eau, de la couche sécable est au moins égale à 0,9.

La couche sécable est pleine , et ne comporte pas de cavités dispersées. La couche sécable ne subit aucun étirage capable de faire baisser sa densité en-dessous de 0,9 et en particulier peut ne subir aucun étirage, en particulier aucun bi-étirage.

La résine utilisée pour la réalisation de la couche sécable peut être identique à celle utilisée pour la réalisation de la couche scellable.

De préférence une troisième couche de matière plastique est prévue du côté de la couche sécable opposé à la couche scellable, la force de liaison entre la couche sécable et cette troisième couche étant supérieure à la force nécessaire pour provoquer la rupture de la couche sécable dans la masse. Cette troisième couche est prévue en particulier pour améliorer la transparence du film et est généralement destinée à être imprimée ou à être associée à d'autres supports tels que d'autres films ou structures par tout moyen de transformation adapté, tel que le contrecollage, l'extrusion, ou la coextrusion-lamination, le calandrage, etc...

Avantageusement, la couche de matière plastique sécable contient une charge minérale dans une proportion de 5 % à 50 % en poids, de préférence 8 % à 20 % en poids. La charge minérale peut être constituée par au moins l'une des matières suivantes : talc, silice, carbonate de calcium, mica. Le talc constitue une charge préférée.

La charge minérale présente un diamètre moyen de taille inférieure à l'épaisseur de la couche sécable et de préférence inférieure à la moitié de l'épaisseur de la couche sécable.

Généralement, la charge minérale est constituée par une poudre présentant un diamètre moyen de taille de particules (D50) inférieur à 10 µm, et plus généralement inférieur à 5 µm, en particulier allant de 0,1 µm à 5 µm.

Un consommateur, au moment de l'ouverture d'un sachet ou d'un récipient fermé à l'aide du film thermoplastique selon l'invention, rencontre une première force correspondant à la rupture de la soudure de la couche scellable, puis une seconde force correspondant à la rupture de la couche sécable dans la masse, la seconde force étant inférieure à la première. La première force plus élevée est synonyme d'étanchéité, la seconde force plus faible correspond à la "pelabilité".

Les matières plastiques des différentes couches du film, notamment lorsque ce dernier se compose de trois couches, sont choisies de manière à être compatibles pour que leur liaison soit suffisante et permette d'atteindre l'objectif recherché.

Les matières sont choisies notamment en fonction du cahier des charges, à savoir non seulement compatibilité entre elles, mais aptitude si nécessaire à l'emballage de produits alimentaires, tenue à la température, aptitude au processus de fabrication.

Les couches du film, en particulier les trois couches, peuvent être réalisées en polymère c'est-à-dire homopolymère ou copolymère ou terpolymère, éventuellement greffé, d'au moins une oléfine telle que l'éthylène ou le propylène, comme par exemple un EVA (éthylène / acétate de vinyle), EBA (éthylène / acrylate de butyle), EAA (éthylène / acide acrylique), EMA (éthylène / anhydride maléique), un terpolymère éthylène/ester acrylique/ anhydride maléique, un terpolymère éthylène/acétate de vinyle/anhydride maléique, une résine ionomère (cation sodium , et de préférence cation zinc). Des exemples de résines ionomères pouvant convenir sont donnés dans EP-A-0 537 080.

Compte tenu de la compatibilité recherchée entre les différentes couches du film, celles-ci peuvent être toutes à base de polymère de l'éthylène, conduisant à un film pasteurisable, ou bien toutes à base de polymère de propylène conduisant alors à un film stérilisable.

Plus spécifiquement, dans un exemple de réalisation, la couche scellable est constituée d'un polyéthylène moyenne densité radicalaire, de densité au moins égale à 0.926 et d'indice de fluidité MFI₂ ( melt flow index à 190°C sous 2,16 kg ) compris entre 0.2 et 7. La couche sécable est réalisée à partir de polyéthylène, en particulier du même polyéthylène moyenne densité radicalaire (MDPE) que la couche de scellage, mélangé avec du talc sous forme de mélange maître.

L'épaisseur totale du film est comprise entre 20 et 250 µm, de préférence entre 30 et 200 µm.

L'épaisseur de la couche scellable est comprise entre 5 et 80 µm, de préférence entre 10 et 50 µm, tandis que l'épaisseur de la couche sécable est comprise entre 5 et 150 µm, de préférence entre 20 et 100 µm. L'épaisseur de la troisième couche éventuelle est choisie pour compléter l'épaisseur totale du film dans les limites indiquées.

L'invention consiste également en un procédé de fabrication d'un film tel que défini précédemment.

Selon ce procédé, la couche sécable ne subit aucun étirage capable de faire baisser sa densité en-dessous de 0,9 et en particulier peut ne subir aucun étirage, en particulier aucun bi-étirage, que ce soit sur elle-même, ou après son association à une ou plusieurs autre(s) couche(s), voire sur le film final.

L'invention consiste, mises à part les dispositions exposées ci-dessus, en un certain nombre d'autres dispositions dont il sera plus explicitement question ci-après à propos d'un exemple de réalisation décrit avec référence au dessin ci-annexé, mais qui n'est nullement limitatif.

La Figure 1 de ce dessin est une coupe schématique fortement agrandie d'une fraction du film selon l'invention soudé à un substrat.

La Figure 2, enfin, illustre le film détaché du substrat.

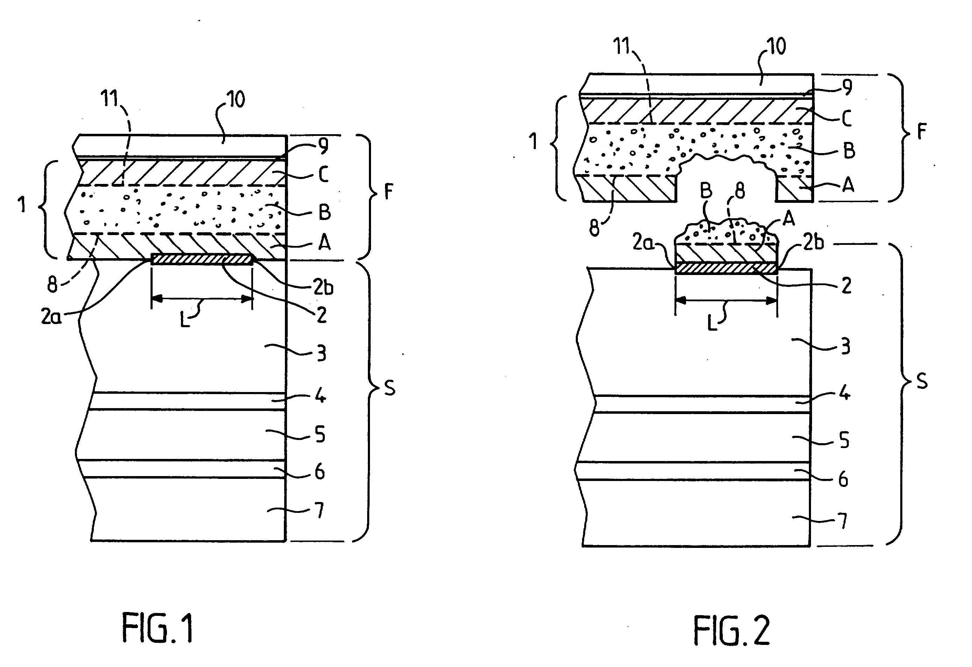

En se reportant à la Figure 1 on peut voir un film thermoplastique 1 qui peut être utilisé en l'état ou associé à d'autres supports.

Ce film 1 comprend une première couche de matière plastique scellable A, qui peut être liée par une soudure 2 à un substrat 3 ou à elle-même.

Dans le cas où le film 1 doit être soudé sur lui-même, il n'y a pas de problème de compatibilité de matériau au niveau de la soudure.

Dans le cas où l'on souhaite souder le film sur un substrat, la couche A et le substrat 3 doivent être compatibles. Si la couche A est un polymère de l'éthylène, la surface du substrat peut aussi être en un polymère de l'éthylène. La même remarque s'applique à un polymère du propylène.

Dans l'exemple considéré, la soudure 2 formée par une bande de largeur L est réalisée sur un substrat 3 en polyéthylène (PE) qui est lui-même fixé, par une couche de liant 4, à une couche de polyamide 5. Une autre couche 6 de liant assure la fixation d'une couche 7 de polypropylène à la couche 5 de polyamide.

Une feuille S est formée par l'ensemble des couches 3 à 7 pour constituer, par exemple, la paroi d'un récipient thermoformé, tel qu'une barquette, dont seul un bord fortement agrandi est représenté sur la Figure 1.

A titre indicatif, l'épaisseur de la couche 3 est de l'ordre de 80 µm, celle de la couche 4 de l'ordre de 10 µm, celle de la couche 5 de l'ordre de 30 µm, celle de la couche 6 de l'ordre de 10 µm et celle de la couche 7 de l'ordre de 40 µm.

Du côté opposé à sa face destinée à être soudée, la couche scellable A est associée, c'est-à-dire liée, à une couche B de matière plastique sécable, c'est-à-dire pouvant se rompre dans la masse. La force de liaison entre les deux couches A, B au niveau de leur interface 8 est supérieure à la force de sécabilité de la couche B.

La couche A est formulée de manière à présenter une fragilité relative mécanique au ras de la soudure 2, suivant les deux bords 2a, 2b. La couche B sécable donne lieu à une rupture cohésive, c'est à dire se fracture dans la masse.

La couche B est avantageusement associée à une troisième couche C de matière plastique du côté opposé à la couche A. Cette couche C est généralement destinée à être imprimée ou à être associée à d'autres supports tels que d'autres films ou structures par tout moyen de transformation adapté tel que le contrecollage, l'extrusion ou la coextrusion-lamination, le calandrage, etc... La couche C peut être réalisée en même temps que l'application d'un film formé des couches A et B sur un support, et ce, par extrusion ou coextrusion-lamination.

La couche C est liée par une couche de colle 9 à un support 10, par exemple en polyéthylène téréphtalate (PET) ou en polyamide "cast" (CPA), c'est-à-dire en polyamide extrudé en filière plate, ou en polyamide orienté (OPA).

La force de liaison entre la couche C et la couche B à l'interface 11 est supérieure à la force de sécabilité de la couche B.

L'ensemble F formé par le film 1 ( couches A, B et C) et le support 10 peut constituer un opercule servant, par exemple, à la fermeture par scellage d'un fond ou récipient thermoformé dans la feuille S.

Bien que le film 1 décrit à propos de la Figure 1 comprenne trois couches A, B et C, ce qui correspond à une solution avantageuse, le film 1 peut être constitué seulement des deux couches A et B.

L'épaisseur totale du film 1 est généralement comprise entre 20 et 250 µm et de préférence entre 30 et 200 µm.

L'épaisseur de la couche scellable A est généralement comprise entre 5 et 80 µm, et de préférence entre 10 et 50 µm.

L'épaisseur de la couche sécable B est généralement comprise entre 5 et 150 µm et de préférence entre 20 et 100 µm.

La couche C éventuelle, complétant la structure, a une épaisseur complémentaire qui dépend de l'épaisseur totale du film 1.

Dans l'exemple illustré sur la figure 1, l'épaisseur de la couche A est d'environ 15 µm, celle de la couche B d'environ 30 µm, celle de la couche C d'environ 15 µm, celle de la couche 9 d'environ 3 µm, et celle du support 10 d'environ 12 µm.

Les trois couches A, B et C peuvent être réalisées en un polymère c'est-à-dire homopolymère, ou copolymère, ou terpolymère, éventuellement greffé, d'au moins une oléfine telle que l'éthylène ou le propylène.

D'une manière générale, la couche A peut être réalisée à partir d'un polyéthylène, quelle que soit sa nature, ou d'une polyoléfine ou d'un polymère scellable sur polyéthylène ou sur lui-même : par exemple, copolymères et terpolymères du type EVA (éthylène/acétate de vinyle), EBA (éthylène/acrylate de butyle), EAA (éthylène/acide acrylique), EMA (éthylène/anhydride maléique), terpolymère éthylène/ester acrylique/ anhydride maléique, terpolymère éthylène/acétate de vinyle/anhydride maléique, résines ionomères essentiellement formées de copolymères de l'éthylène dont le cation peut être le sodium et est de préférence le zinc (assurant une compatibilité avec le polyéthylène). De telles résines ionomères sont décrites par exemple dans EP 0 537 080.

Plus spécifiquement la couche A est réalisée à partir d'un polyéthylène moyenne densité radicalaire, de densité au moins égale à 0.926 et d'indice de fluidité MFI₂ (melt flow index à 190°C sous 2,16 kg) compris entre 0.2 et 7.

La couche B présente une densité, par rapport à l'eau, supérieure ou égale à 0.9. La couche B est pleine et ne comporte pas de cavités. D'une manière générale, la couche B est réalisée à partir d'un mélange d'une matière semblable à, ou compatible avec, celle de la couche A avec une charge minérale dans une proportion de 5 à 50 % en poids, de préférence de 8 à 20 % en poids. La charge minérale présente un diamètre moyen de taille inférieure à l'épaisseur de la couche sécable B et de préférence inférieure à la moitié de l'épaisseur de la couche sécable B. Cette charge minérale est généralement constituée par une poudre présentant un diamètre moyen de taille de particules inférieur à 10 µm, de préférence inférieur à 5 µm, par exemple allant de 0,1 à 5 µm.

La charge minérale est avantageusement du talc, mais peut être de la silice, du carbonate de calcium CaCO₃, du mica , ou un mélange de ces matières. Toutefois, la nature de cette charge minérale peut être pratiquement quelconque.

La couche B ne subit, après extrusion, aucun étirage capable de faire baisser sa densité en-dessous de 0,9 et en particulier peut ne subir aucun étirage, en particulier aucun bi-étirage , ni individuellement, ni après association à une ou plusieurs autre(s) couche(s), voire sur le film final. L'épaisseur de la couche B présente une constance satisfaisante.

La couche C, d'une manière surprenante, apporte de la transparence à l'ensemble du film. On pense que cette couche C diminue la rugosité de la surface de la couche B chargée en particules. En particulier, après pelage, une ligne ou zone mate, notamment blanche, apparaît à l'endroit de la soudure alors qu'avant pelage la zone correspondante était transparente. Cette ligne mate irréversiblement créée après pelage témoigne de l'ouverture même si le film est replacé sur le substrat dans la position de fermeture. L'apparition de cette ligne mate à l'ouverture est frappante.

Dans un exemple de réalisation, un même polyéthylène moyenne densité radicalaire (MDPE) est utilisé pour les couches A et B, ce polyéthylène étant mélangé avec du talc pour la couche B, sous forme de mélange maître. La couche A est réalisée à partir d'un polyéthylène moyenne densité radicalaire de densité égale à 0.932 avec un indice de fluidité MFI₂ égal à 4 ( MFI₂ désigne l'indice de fluidité mesuré à 190°C, sous une charge de 2,16 kg, selon Norme NFT 51-016 ). La couche B est réalisée à partir d'un mélange de 90 % en poids du même polyéthylène moyenne densité radicalaire (MDPE) mélangé avec 10 % en poids de talc. La couche C est réalisée avec le même polyéthylène que la couche A. Les épaisseurs respectives sont de 12 µm pour les couches A et C et de 36 µm pour la couche B. La couche C est appliquée sur un support 10 en polyamide cast (CPA).

Les couches situées au-delà de la couche C, telles que la couche 10 servant de support peuvent être obtenues par extrusion ou coextrusion tubulaire ou cast suivie ou non d'une mono ou biorientation mécanique, extrusion ou coextrusion couchage ou lamination. D'une manière générale on peut utiliser pour cette couche 10 tout type de support : polyamide (PA), polypropylène (PP) et copolymère de polypropylène (COPP), polystyrène (PS), polyéthylène téréphtalate (PET), polyéthylène téréphtalate amorphe (APET), etc.

Les matières des différentes couches sont choisies en fonction du cahier des charges, à savoir : compatibilité entre elles, aptitude à l'emballage de produits alimentaires, tenue à la température, aptitude au procédé de fabrication.

Lorsque les trois couches A, B, C sont à base de polymères de l'éthylène, présentant entre eux la compatibilité souhaitée, on obtient un film 1 pasteurisable, c'est-à-dire qui supporte un traitement de pasteurisation consistant en un chauffage jusqu'à 100°C.

Lorsque les trois couches A, B et C sont à base de polymères du propylène, compatibles entres eux, on obtient un film 1 stérilisable, c'est-à-dire qui peut supporter un traitement de stérilisation par chauffage au-delà de 100°C jusqu'à 140°C.

Il est à noter que les polymères de l'éthylène d'une part, et les polymères du propylène d'autre part, sont difficilement compatibles de sorte qu'il convient de ne pas les associer directement sans l'utilisation d'un liant ou d'une autre matière permettant de les rendre compatibles.

Le film 1 peut être obtenu par coextrusion tubulaire ou cast filière plate, par extrusion ou coextrusion lamination, par extrusion ou coextrusion couchage, par calandrage (réactivation thermique d'une couche de polymère à bas point Vicat ).

Ceci étant, le comportement du film 1 à la fermeture et à l'ouverture est le suivant.

Pour la fermeture d'un sachet réalisé avec le film 1, ou d'un récipient réalisée dans une feuille S selon Fig.1, la couche A du film est soudée soit sur elle-même soit sur le substrat 3, suivant une bande 2.

Pour faciliter l'ouverture, on prévoit généralement une languette (non représentée) de l'opercule F qui est libre de toute soudure.

Pour l'ouverture, le consommateur d'une part saisit cette languette de l'opercule F suivant toute son épaisseur, en serrant l'ensemble des couches A à 10 et, d'autre part, maintient le fond ou récipient comportant la couche 3. Le consommateur exerce une traction suivant une direction sensiblement orthogonale au plan moyen de la bande de soudure 2 afin de séparer l'opercule F du fond .

Le Consommateur doit vaincre une première force nécessaire pour casser la première couche A, au ras de la soudure 2, comme illustré sur Fig.2, puis une seconde force, inférieure à la première, pour la rupture cohésive de la couche B qui se fracture de manière aléatoire dans la masse. Une bande de la couche A de largeur correspondant à celle de la soudure 2, et une fraction de la couche B restent attachées au substrat comme visible sur Fig.2. Le reste des couches A et B demeure attaché au support 10. La deuxième force constitue la force de "pelabilité", régulière et agréable.

D'une fabrication à l'autre, cette deuxième force de rupture cohésive de la couche B peut être maintenue constante, tandis que la première force nécessaire pour casser la couche A peut être adaptée, suivant le type de fermeture, en jouant sur la nature et l'épaisseur de la couche A, tout en conservant la première force supérieure à la seconde.

Après séparation du substrat 3 et du support 10, une zone mate , notamment blanche, correspond au profil de la soudure 2 sur le substrat 3, comme expliqué précédemment. Cette zone ou ligne au contour très net est recherchée pour son côté sécurisant, synonyme d'étanchéité. Cette zone est pratiquement exempte de fibres ou morceaux du fait de la rupture de la couche B dans la masse.

Lorsque le film 1 est soudé sur lui-même, puis pelé, une seule des deux couches B subit la rupture cohésive, à savoir celle qui oppose la plus faible résistance mécanique.

La soudure de la couche A sur elle-même ou sur un substrat tel que 3 peut être très forte puisque la "pelabilité" intervient dans la couche B, et non pas au niveau de la soudure 2. Le film 1 soudé peut donc assurer une très bonne étanchéité, ce qui constitue un gros avantage par rapport aux autres films dits "pelables" dans lesquels soudure et pelabilité sont réalisées généralement sur la même interface correspondant à la soudure.

Un film 1 conforme à l'invention convient d'une manière générale à l'emballage de matières et de produits et plus spécifiquement :
- au conditionnement de produits alimentaires (alimentation humaine et animale) sous quelque forme que ce soit : liquide, pâteuse, en poudre, solide ;
- au conditionnement de produits non alimentaires sous quelque forme que ce soit : liquide, pâteuse, en poudre, solide ;
- au conditionnement de produits à usage pharmaceutique, parapharmaceutique (cosmétiques) et médical.

Des exemples d'application sont fournis ci-après.

### PRODUITS ALIMENTAIRES

1/ *Conditionnement de préparations culinaires* (plats, sauces, etc.) à partir d'un film multicouche thermoformé sur plusieurs pistes (quatre pour l'exemple) sur une ligne de conditionnement horizontale, et operculé en ligne à l'aide de films multicouches obtenus par coextrusion ou contrecollage.

Le film 1 selon l'invention peut être utilisé soit comme élément soudant de la partie inférieure thermoformée; soit comme élément soudant de la partie supérieure (opercule); soit comme élément soudant des deux parties, puisque le film est également pelable sur lui-même .

Dans l'exemple considéré l'opercule était constitué d'un polyamide cast (CPA) d'une épaisseur de 30 µm contrecollé au film 1 d'épaisseur 60 µm.

La partie thermoformée était réalisée à partir d'une structure coextrudée (coextrusion cast) associant une couche de polypropylène (PP), une couche de polyamide (PA) et une couche de polyéthylène (PE).

Après conditionnement, les emballages sont soumis à une pasteurisation à 90°C pendant 1 heure et 30 minutes et ensuite, afin de reproduire l'utilisation par le consommateur, plongés pendant 10 à 15 minutes dans un bain-marie (bain d'eau bouillante), ressortis et désoperculés.

2/ *Conditionnement de café* (250 g) sous vide sur des lignes de conditionnement automatique, à partir d'un film contrecollé associant une épaisseur de 15 µm de polyamide orienté métallisé (OPAmét) au film 1 selon l'invention, et réalisé en une épaisseur de 80 µm.

Dans ce cas le film 1 est scellé sur lui-même, c'est-à-dire couche A contre couche A.

### EMBALLAGE A USAGE MEDICAL

Le film selon l'invention peut servir au conditionnement de matériel chirurgical à partir de sachets soudés sur trois côtés, le quatrième côté étant soudé par l'utilisateur final après avoir conditionné le matériel. Les sachets sont ensuite stérilisés par exemple par rayonnement ou en autoclave.

Selon un exemple, une face du sachet est réalisée à partir d'un film contrecollé associant un polyamide cast d'une épaisseur de 30 µm au film 1 de l'invention sous une épaisseur de 50 µm ; l'autre face en regard du sachet est réalisée à partir d'une structure similaire mais avec un film polyéthylène classique du type polyéthylène basse densité radicalaire (LDPE) à la place du film selon l'invention. Les sachets une fois fermés sont ensuite stérilisés par rayonnement gamma.

Compte tenu de la capacité du film 1 selon l'invention à se sceller et à se peler sur lui-même, le même résultat peut être obtenu en utilisant la même structure pour les deux faces du sachet.

Un film conforme à l'invention présente de nombreux avantages.

Il offre une sécurité totale au niveau de l'étanchéité de la soudure puisque celle-ci est aussi forte que souhaitée au niveau de la couche A , et n'intervient pas pour la pelabilité. Dans les solutions antérieures, correspondant à une pelabilité dite adhésive s'effectuant le long de la soudure, il y a par définition une liaison hétérogène avec des risques de fuite. L'inconvénient lié à la présence de cavités dans la couche sécable selon l'art antérieur évoqué initialement ne se rencontre pas dans le cas du film selon l'invention.

Le film résiste au moins aux contraintes de pasteurisation, ce qui n'est pas le cas des films pelables adhésifs.

Le film selon l'invention peut être transparent par la nature des matériaux utilisés alors que la majorité dès films de l'art antérieur pelables sont troubles ou, au mieux, translucides.

Le film de l'invention ne demande aucun réglage particulier par rapport au film soudant habituel tel que le polyéthylène ou le polypropylène.

La force de pelabilité est régulière et douce.

L'enlèvement du film comme une peau se traduit par une zone, correspondant au profil de l'outil de soudure, mate et blanche et sans morceaux ou fibres dans cette zone.

La couche scellable A située d'un côté de la couche sécable B et éventuellement la troisième couche C située de l'autre côté confèrent au film 1 la transparence et en optimisent la transformation, par exemple en évitant le dépôt en sortie de filière (collerette) ou sur les outillages de soudure, dépôt qui serait occasionné par la présence de charges minérales en assez forte teneur dans la couche B. Cette couche B sécable ne nécessite pas d'orientation.

Dans le cas de l'emballage sous vide de produits en poudre tels que du café, dans des sachets munis de valves en général réalisées en polyéthylène et soudées sur le film intérieur en polyéthylène du sachet, grâce au concept de l'invention il n'y a aucun problème de scellage de ces valves sur la couche A. Ce n'est pas le cas de structures à base de polybutylène qui sont pelables sur polyéthylène et donc sur les valves.

## Revendications

1. Film thermoplastique multicouche pelable, pouvant être scellé sur lui-même ou sur un substrat, comprenant une couche (A) de matière plastique scellable par soudure sur elle-même ou sur le substrat, la couche scellable (A), du côté opposé à sa face destinée à être soudée, étant liée à une couche (B) de matière plastique sécable dans la masse, la force de liaison entre les deux couches (A, B) étant supérieure à la force de rupture de la couche (B), tandis que la couche scellable (A) présente une relative fragilité au ras de la soudure (2) de sorte que, lors de la séparation du film (1), la couche scellable (A) est propre à se casser au ras (2a,2b) de la soudure, et qu'ensuite la couche sécable (B) se fracture dans la masse , caractérisé par le fait que la densité, par rapport à l'eau, de la couche sécable (B) est au moins égale à 0.9.

2. Film thermoplastique selon la revendication 1, caractérisé par le fait que la couche sécable (B) est pleine, dépourvue de cavités.

3. Film thermoplastique selon la revendication 1 ou 2, caractérisé par le fait que la couche sécable (B), après extrusion, n'a subi aucun étirage, en particulier aucun bi-étirage.

4. Film thermoplastique selon l'une des revendications 1 à 3, caractérisé par le fait qu'une troisième couche (C) de matière plastique est prévue du côté de la couche sécable (B) opposé à la couche scellable (A), et que la force de liaison entre les deux couches (B, C) est supérieure à la force de rupture de la couche (B).

5. Film thermoplastique selon l'une des revendications précédentes, caractérisé par le fait que la couche sécable (B) en matière plastique contient une charge minérale dans une proportion de 5% à 50% en poids, de préférence 8% à 20% en poids.

6. Film thermoplastique selon la revendication 5, caractérisé par le fait que la charge minérale est constituée par du talc.

7. Film thermoplastique selon la revendication 5, caractérisé par le fait que la charge minérale est constituée par au moins l'une des matières suivantes: talc, silice, carbonate de calcium, mica.

8. Film thermoplastique selon l'une des revendications 5 à 7, caractérisé par le fait que la charge minérale présente un diamètre moyen de taille inférieure à l'épaisseur de la couche sécable et de préférence inférieure à la moitié de l'épaisseur de la couche sécable.

9. Film thermoplastique selon la revendication 8, caractérisé par le fait que la charge minérale est constituée par une poudre présentant un diamètre moyen de taille de particules inférieur à 10 µm, plus généralement inférieur à 5 µm, en particulier allant de 0,1 µm à 5 µm.

10. Film thermoplastique selon l'une des revendications précédentes, caractérisé par le fait que chaque couche (A, B, C) est réalisée en polymère c'est-à-dire homopolymère ou copolymère ou terpolymère, éventuellement greffé, d'au moins une oléfine telle que l'éthylène ou le propylène, en particulier un EVA (éthylène / acétate de vinyle), EBA (éthylène / acrylate de butyle), EAA (éthylène / acide acrylique), EMA (éthylène / anhydride maléique), un terpolymère éthylène/ester acrylique/ anhydride maléique, un terpolymère éthylène/acétate de vinyle/anhydride maléique, une résine ionomère (cation sodium , et de préférence cation zinc).

11. Film thermoplastique selon la revendication 10, caractérisé par le fait que les différentes couches (A,B,C) du film sont toutes à base de polymère de l'éthylène, conduisant à un film pasteurisable.

12. Film thermoplastique selon la revendication 11, caractérisé par le fait que la couche scellable (A) est constituée d'un polyéthylène moyenne densité radicalaire, de densité au moins égale à 0.926 et d'indice de fluidité MFI₂ (melt flow index à 190°C sous 2,16 kg) compris entre 0.2 et 7, et la couche sécable (B) est réalisée à partir de polyéthylène, en particulier du même polyéthylène moyenne densité radicalaire (MDPE) que la couche de scellage, mélangé avec du talc.

13. Film thermoplastique selon l'une des revendications précédentes, caractérisé par le fait que la résine utilisée pour la réalisation de la couche sécable (B) est identique à celle utilisée pour la réalisation de la couche scellable (A).

14. Film thermoplastique selon la revendication 10, caractérisé par le fait que les différentes couches (A,B,C) du film sont toutes à base de polymère de propylène conduisant à un film stérilisable.

15. Film thermoplastique selon l'ensemble des revendications 4 et 5, caractérisé par le fait qu'il est transparent et qu'après pelage une ligne mate, en particulier blanche, apparaît à l'endroit de la soudure.

16. Film thermoplastique selon l'une des revendications précédentes, caractérisé par le fait que son épaisseur totale est comprise entre 20 et 250 micromètres, de préférence entre 30 et 200 micromètres.

17. Film thermoplastique selon la revendication 16, caractérisé par le fait que l'épaisseur de la couche scellable (A) est comprise entre 5 et 80 µm, de préférence entre 10 et 50 µm, l'épaisseur de la couche sécable (B) est comprise entre 5 et 150 µm, de préférence entre 20 et 100 µm et l'épaisseur de la troisième couche éventuelle ( C ) est choisie pour compléter l'épaisseur totale dans les limites indiquées.

18. Procédé de fabrication d'un film thermoplastique selon l'une des revendications précédentes, caractérisé par le fait que la couche sécable (A) ne subit aucun étirage capable de faire baisser sa densité en-dessous de 0,9 et en particulier peut ne subir aucun étirage, en particulier aucun bi-étirage, ni individuellement, ni après association avec au moins une autre couche, voire sur le film final.

19. Procédé selon la revendication 18, caractérisé par le fait que le film (1) est obtenu par coextrusion tubulaire ou cast filière plate, ou par extrusion ou coextrusion lamination, ou par extrusion ou coextrusion couchage, ou par calandrage .
